(19) **Europäisches Patentamt / European Patent Office / Office européen des brevets**

(11) **EP 1 972 916 A2**

(12) # EUROPEAN PATENT APPLICATION

(43) Date of publication:
24.09.2008 Bulletin 2008/39

(51) Int Cl.:
*G01L 9/14* (2006.01)     *G01L 11/02* (2006.01)

(21) Application number: 08004904.2

(22) Date of filing: 17.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 19.03.2007 DE 102007013691

(71) Applicant: Tyco Electronics AMP GmbH
64625 Bensheim (DE)

(72) Inventors:
• **Riedl, Gerhard**
 **76297 Stutensee-Friedrichstal (DE)**
• **Do, Son**
 **69207 Sandhausen (DE)**

(74) Representative: **Grünecker, Kinkeldey, Stockmair & Schwanhäusser Anwaltssozietät**
**Leopoldstrasse 4**
**80802 München (DE)**

(54) **Contactless position sensor for pressure transducers**

(57) The invention relates to a pressure-measuring device with a pressure-dependent displaceable diaphragm which is coupled to a substantially linearly displaceable transmission member. The invention further relates to a kit for a pressure-measuring device, the pressure-measuring device comprising a pressure-dependent displaceable diaphragm which is coupled to a substantially linearly displaceable transmission member, and a method for determining the position of a diaphragm which moves in a pressure-measuring device depending on a pressure differential, the movements of the diaphragm being transferred by a substantially linearly displaceable transmission member. According to the invention, the movements of the diaphragm can easily be detected by a sensor, which may be arranged outside the pressure-measuring device, in that the transmission member engages with a rotatably mounted rotational element, eccentrically to the rotational axis thereof, in such a way that the substantially linear movements of the transmission member are converted into rotational movements of the rotational element which may be provided as a rotary signal transmitter with a marker

Fig. 1

**Description**

The invention relates to a pressure-measuring device with a pressure-dependent displaceable diaphragm which is coupled to a substantially linearly displaceable transmission member. The invention further relates to a kit for a pressure-measuring device, the pressure-measuring device comprising a pressure-dependent displaceable diaphragm which is coupled to a substantially linearly displaceable transmission member, and a method for determining the position of a diaphragm which moves in a pressure-measuring device depending on a pressure differential, the movements of the diaphragm being transferred by a substantially linearly displaceable transmission member.

Conventional pressure-measuring devices are known and are also referred to as pneumatic servos or diaphragm cylinders. They are used, for example, in exhaust gas flow-driven pressure-chtirging devices for combustion engines (turbo chargers). The pressure-measuring devices compare the air pressure generated by the turbo charger with a reference pressure and regulate the output of the turbo charger by controlling an actuator, such as, for example, a valve.

According to the prior art, a conventional pressure-measuring device is usually conceived as a cylinder operating in a simple manner, wherein a piston rod or a transmission member is connected to a diaphragm fixed to the cylinder instead of to a piston. If flat or pot diaphragms are used this construction only allows a very small degree of movement. However, if a roll diaphragm is used larger degrees of movement up to, for example, 100 mm are possible. Since, in contrast to pistons, there is no sealing friction when the diaphragm moves and therefore the breakaway torque is also very low, roller diaphragms are particularly suitable for the regulatory and control functions mentioned at the outset.

Pressure-measuring devices are often exposed to adverse ambient and operating conditions, such as high pressures and temperatures as well as abrasive or polluting media. Nevertheless, they must satisfy high demands with regard to the precision of measurements and repetition, reaction speed and life span. At the same time, they should be as easy to construct and install as possible, in particular with regard to industrial manufacture and assembly.

In the case of complex measuring, control and regulatory functions, it is necessary to integrate the pressure-measuring devices into electronic systems. For this purpose, the position of the diaphragm must be detected using a sensor.

It seems that few measures are known from the prior art for rendering the position of a diaphragm in a conventional pressure-measuring device accessible to detection by a sensor. In fact, H. Ebertshäuser and S. Hellduser show a pressure-measuring device configured as a diaphragm cylinder in Fluidtechnick von A - Z, vereinigte Fachverlage, Mainz 1995. ISBN 3-7830-0286-9; however, the description does not mention any possibility of detecting the position of the diaphragm using a sensor. The conventional approach appears only to provide for the diaphragm to be coupled to a piston rod or a transmission member so as thus mechanically and directly to actuate an actuator, such as, for example, the shutoff element of a valve. Consequently, known embodiments of conventional pressure-measuring devices seem to be conceived and constructed, for the most part, from a purely mechanical point of view, wherein their assembly makes it difficult to access the diaphragm with a sensor in order to detect the position of said diaphragm.

The object of the invention is therefore to facilitate the detection of the position of the diaphragm in a conventional pressure-measuring device.

This object is achieved in accordance with the invention, for the pressure-measuring device mentioned at the outset, in that the transmission member engages with a rotatably mounted rotational element, eccentrically to the axis of rotation thereof, in such a way that the substantially linear movements of the transmission member can be converted into rotational movements of the rotational element.

The advantage of this simple solution is that the position or the angle of rotation of the rotational element indicates the position of the diaphragm.

The solution according to the invention may be combined in any way with the following further advantageous embodiments respectively and further improved.

According to a first advantageous embodiment, it may therefore be provided for the rotational element to be a rotary signal transmitter with at least one marker, of which the rotational position can be detected by a sensor. The position or angle of rotation of the rotational element may thus more easily be detected using a sensor and converted into electrical signals. Optimum combinations of sensor and marker may be selected for the respective field of application.

Depending on demand, and according to further possible advantageous embodiments of the pressure-measuring device, the marker may be a magnet and the sensor may be a magnetic field, the marker may be an optical marker and the sensor may be an optical sensor, or the marker may be a three-dimensional structure and the sensor may be a proximity sensor. In these embodiments, the marker can be detected using a sensor in a contact-free and therefore feedback-free manner with regard to the position or axis of rotation of the rotational element.

According to a further possible advantageous embodiment of the pressure-measuring device, it can be provided for the pressure-measuring device to comprise at least one pressure space. The pressure space can receive a fluid, of which the pressure is to be ascertained. The pressure-measuring device, or the diaphragm thereof, does not therefore need to be integrated into the actual containers or conduit for the fluid. The fluid can simply be diverted from its container or from a conduit and fed to the pressure space. Depending on demand, a plurality of pressure spaces may also be provided. In this case, the diaphragm may be arranged between the pressure spaces and can detect the pressure differential between various fluids in the pressure spaces, the pressures of which may differ from the ambient pressure.

According to a further possible advantageous embodiment of the pressure-measuring device, it can be provided for the sensor to be attached to an attachment mechanism on the pressure-measuring device. The sensor is not, therefore, an integral component part of the pressure-measuring device and may, depending on demand, be used or omitted. The attachment mechanism for the sensor can be configured in such a way that it allows the sensor to be fixed and attached as simply as possible, which simplifies the assembly and maintenance of the pressure-measuring device.

The assembly and maintenance of the pressure-measuring device are further simplified when it is provided, according to a further possible advantageous embodiment, for the attachment mechanism to be arranged outside the at least one pressure space. This embodiment has a plurality of advantages: during maintenance works it is not necessary to interfere with any of the pressure spaces of the pressure-measuring device, because the sensor is accessible outside the pressure-measuring device; during assembly, the pressure-measuring device can initially be assembled without a sensor and still be fully functional; if the sensor is attached or calibrated only later on, the functionality of the pressure-measuring device is not affected; and furthermore, the attachment of a sensor to the outside facilitates construction of the pressure-measuring device, as the amount of space required for the sensor in the pressure space does not have to be considered. The assembly of the functional component parts of the pressure-measuring device, such as the pressure space, the transmission member, the rotational element and the diaphragm, may therefore be optimised independently of the housing of the sensor. In addition, it is a great advantage that the sensor is not exposed to the possibly adverse ambient conditions prevailing in the pressure space as mentioned at the outset. As a result, the selection and construction of the sensor are facilitated, the resilience of the sensor only having to comply with the conditions prevailing outside the pressure-measuring device.

According to a further possible advantageous embodiment of the pressure-measuring device, it can be provided for the diaphragm to be coupled to at least one spring which is effective substantially parallel to the path of displacement S of said diaphragm. The spring can also be used to hold the diaphragm in a starting position in which the position of the diaphragm is well defined. This facilitates calibration of the pressure-measuring device. The spring load has a direct influence on the displacement forces necessary for actuating the diaphragm and can be used to determine the measurement range of the pressure-measuring device.

According to a further possible advantageous embodiment, it can be provided for the transmission member to be a toothed rack and the rotational element to be configured, at least in portions, as a toothed wheel which engages with the toothed rack. The toothed rack and toothed wheel form a transmission gearbox which can be constructed according to the requirements of each case. In the case of a toothed wheel with a constant geometrical radius $r$, the path of displacement $S$ of the diaphragm results from the equation:

$$S = \alpha \cdot \frac{\pi}{180°} \cdot r \,,$$

where $\alpha$ represents the angle of rotation of the toothed wheel and $\pi$ is the circular constant.

In order to keep the toothed rack in constant contact with the diaphragm it can be provided according to a further possible advantageous embodiment for the toothed rack to be pressed against the diaphragm with the aid of at least one pressure spring. The toothed rack and the diaphragm are thus in contact with one another but are not positively connected, it thus being easily possible to detach the toothed rack, and therefore the transmission mechanism for the movements of the diaphragm, from the diaphragm with no further steps being necessary.

If a coupling is desired between the diaphragm, or component parts resting against said diaphragm and a transmission mechanism according to the invention for the movements of said diaphragm, it may be provided, according to a further possible advantageous embodiment, for the transmission member to be a connecting rod and to form a crankshaft drive with the rotational element. According to a further possible advantageous embodiment, the crankshaft drive can be attached to the diaphragm in that the connecting rod is fixed by at least one ball bearing to the diaphragm or a component part resting against said diaphragm and/or to the rotational clement. Even for a pressure-measuring device which is as feedback-free as possible, the advantages of a ball bearing can be fully utilised, which ball bearing, when rigidly coupled, can react quickly and also has a minimal amount of frictional resistance. When using a crankshaft drive to transfer the movements of the diaphragm to the rotational element, the path of displacement $S$ of the diaphragm results from the rotational angle $\alpha$ of the rotational element according to the equation:

$$S = r \cdot (1 - \cos(\alpha)) + l \cdot [1 - \sqrt{1 - \left(\frac{r}{l}\right)^2 \cdot \sin^2(\alpha)}]$$

where *l* is the length of the connecting rod and *r* is the distance between the centre of rotation of a measuring point or a marker on the rotational element and the hinge point at which the connecting rod strikes the rotational element,

According to a further possible advantageous embodiment, it can be provided for the transmission member and the rotational element to be arranged in the at least one pressure space. As a result, additional openings in the pressure space may be omitted which are a weak point or a source of error of the pressure-measuring device because they must simultaneously ensure that the transmission member and the rotational element are sealed and mobile.

Manageability of the pressure-measuring device is improved according to a further possible advantageous embodiment in that the device comprises a transformation module which comprises at least the rotational element, allows a sensor module containing at least one sensor to be fixed to the attachment mechanism, comprises a cover which seals the at least one pressure space, at least in part, and comprises a body which is configured so as to complement the cover, which body receives the diaphragm. The pressure-measuring device therefore consists substantially of four component parts, namely the transformation module, a sensor module, a cover and a body, which allow the pressure-measuring device to be constructed in a compact manner at a high level of integration and which simplify the final assembly.

With regard to the kit mentioned at the outset for a pressure-measuring device, the above object is achieved in accordance with the invention in that the kit includes a transformation module and a sensor module with at least one sensor, the transformation module comprising at least one rotational element which can engage with the transmission member and by means of which the substantially linear movements of the transmission member can be converted into rotational movements of the rotational element, and the position of the rotational element can be detected by the sensor. The translatory movements of the diaphragm can therefore be converted in accordance with the invention into rotational movements in a simple manner by fitting a transformation module in a pressure-measuring device. The kit may also consist of a ready-assembled pressure-measuring device with a transformation module which is already integrated and a separate sensor which is suitable for a pressure-measuring device.

The sensor contained in the kit for the pressure-measuring device can be preassembled and optimally adapted for attachment to the pressure-measuring device and detection of the position of the rotational element. As a result, the accuracy of the measurements is improved and it is easier to evaluate the measurement data because the sensor signals of the sensor module contained in the kit are within a known range.

With regard to the method mentioned at the outset for determining the position of a diaphragm in a pressure-measuring device, the above object is achieved according to the invention in that the substantially linear movements of the transmission member are converted into rotational movements of a rotational element. As a result, the position of the diaphragm can be indicated via the angle of rotation of the rotational element and can be detected in a very simple manner.

A method according to the invention for determining the position of a diaphragm can be improved in that the transmission member engages with the rotational element eccentrically to an axis of rotation of the rotational element. As a result, linear movements of the transmission member are very easily converted into rotational movements of the rotational element.

In a method according to the invention for determining the position of a diaphragm, the angle of rotation of the rotational element is particularly easy to detect if it is provided for the rotational element to be provided with at least one marker in the form of a magnet, an optical marker and/or a three-dimensional structure, and for the position of the rotational element to be able to be detected with a sensor in a contact-free manner. The type and form of the marker may be adapted to the demands on the method according to the invention in each case, and allow the angle of rotation of the rotational element to be ascertained in a manner which is as feedback-free as possible, because a sensor for detecting the marker does not have to be directly and mechanically connected to the rotational element.

A method according to the invention for determining the position of a diaphragm can be improved in that the pressure-measuring device is provided with at least one pressure space. The fluid(s) to be measured can be fed into the one or more pressure spaces, it being possible to configure the pressure spaces according to the respective requirements.

A method according to the invention for determining the position of a diaphragm can be improved in that the markers are arranged in the at least one pressure space and can be detected by a sensor outside the at least one pressure space. As a result, the wall of the pressure space concerned remains largely unaffected and does not have to be penetrated by a sensor in order for the marker to be detected, which would be a weak point in a method according to the invention for determining the position of a diaphragm as it would lead to the measurement values being incorrect if the aperture were to leak.

An appropriate addition to a method according to the invention for determining the position of a diaphragm is for the transmission member to be formed as a toothed rack, at least in portions, and for the rotational body to be configured as a toothed wheel, at least in portions. A transmission mechanism for the movements of the diaphragm which substantially consists of the transmission member and the rotational element forms a simple transmission gearbox, of which the transmission function is fundamentally dependent on the geometrical radius $r$ of the rotational body which is configured as a toothed wheel, at least in portions. When using a gear box of this type, an appropriate addition to a method according to the invention for determining the position of a diaphragm is for the transmission member to be pressed against the diaphragm with the aid of a pressure spring. A mechanical contact between the transmission member and the diaphragm can therefore be achieved in a relatively simple manner without having to rigidly couple the transmission member to the diaphragm.

If, in a method according to the invention for determining the position of a diaphragm, a coupling between the transmission member and diaphragm is desired, an appropriate addition to the method involves cooperatively constructing the transmission member and the rotational element as a crankshaft drive.

A further appropriate addition to a method according to the invention for determining the position of a diaphragm is for the diaphragm to be held in a starting position A by means of a force F. This approach has several advantages: on the one hand, a defined starting position A of the diaphragm facilitates calibration since the starting position A is a basic condition or a zero point or base value for the pressure ratios to be measured; on the other hand, the force F, which can be generated, for example, by a spring, for determining the measurement range in a method according to the invention can be used in that the force F is directed, at least proportionately, against a force which is exerted on the membrane by a pressure to be measured.

In general, a method according to the invention for determining the position of a diaphragm can be appropriately simplified in that the pressure-measuring device consists substantially of a transformation module, a cover and a body, at least the rotational element being integrated into the transformation module, the diaphragm being fixed to the body and the at least one pressure room being sealed, at least in part, by the cover. As a result, a method according to the invention can be carried out substantially by three modules, namely the transformation module, a body and a cover. A sensor or sensor module for electronically detecting the position of the rotational element may also be used if it is not satisfactory to manually detect the position of the rotational element.

The invention will be described hereinafter in greater detail and in an exemplary manner using advantageous embodiments and with reference to the drawings. The described embodiments are only possible configurations in which, however, the individual features are as described above, can be provided independently of one another or can be omitted. In the drawings:

Fig. 1 is a schematic cross-section of a pressure-measuring device configured according to the invention with a toothed rack and toothed wheel;
Fig. 2 is a schematic sectional view of a pressure-measuring device configured according to the invention with a crankshaft drive;
Fig. 3 is a schematic block diagram of a pressure device according to the invention constructed in a modular manner.

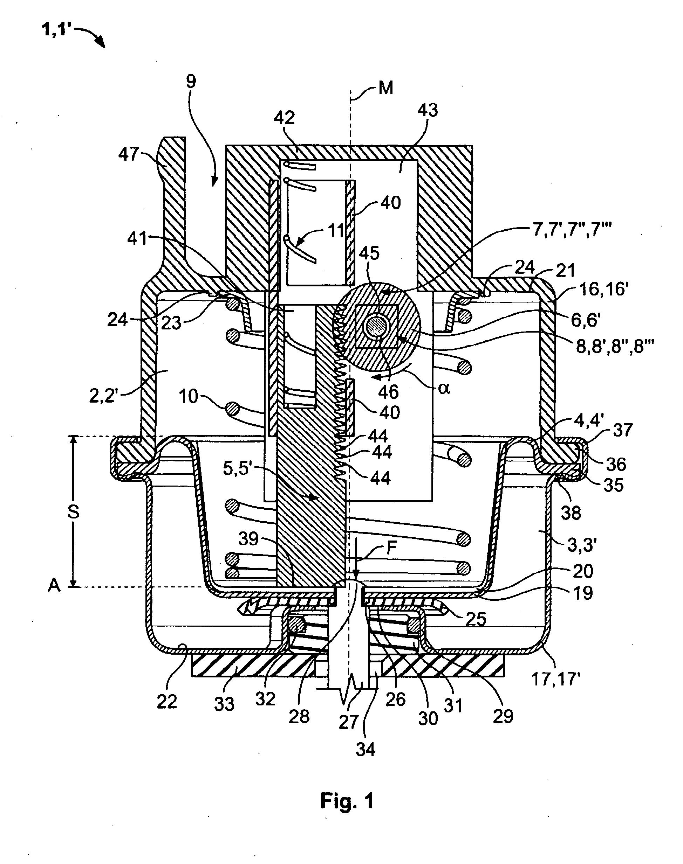

First of all, the construction of a pressure-measuring device 1 configured according to the invention will be described with reference to Fig. 1, which shows a schematic sectional view of a pressure-measuring device 1 configured according to the invention.

The pressure-measuring device 1 comprises two pressure spaces 2, 3. The two pressure spaces 2, 3 are configured as two chambers 2', 3' which are substantially symmetrical about a centre axis M of the pressure-measuring device 1 and are formed from a cylindrical cover 16 and a cylindrical body 17. A diaphragm 4 is arranged between the cover 16, also referred to as a box cover 16', and the body 17, also referred to as a box base 17'.

The edge of the diaphragm 35 rests against a portion 36 surrounding the edge of the box cover 17'. The edge of the box base 17 is a rabbet 37 which encompasses the portion 36 at the box cover 16' and the edge 35 of the diaphragm 4 and therefore sealingly compresses the diaphragm 4 between the box cover 16' and the box base 17' and, at the same time, connects the box cover 16' to the box base 17'. So as to improve the seal, the edge 35 of the diaphragm 4 is thicker than the centre of the diaphragm 4 and is also compressed in the region of a groove 38 in the base of the rabbet 37.

In this embodiment, the diaphragm 4 is configured as a pot diaphragm 4'. The flat diaphragm base 19 of said pot diaphragm is reinforced on the side facing the box cover 16' with a diaphragm plate 20 which is parallel to both the upper side 21 of the box cover 16' and the base 22 of the box base 17'.

Between the upper side 21 of the box cover and the diaphragm plate 20 a pressure spring 10 is arranged which presses the diaphragm base 19 into a starting position A on the base 22 of the box base. The spring 10 is centred in the box cover 16' with the aid of a conical sleeve 23 which, in turn, is centred by an annular projection 24 on the inner side of the upper side 21 of the box cover 16' and is secured against displacement.

On the side of the diaphragm 4 facing the box base 17', a disc-shaped washer 25 rests against the diaphragm base 19 from beneath with its flattened side. The diaphragm base 19 is therefore sandwiched between the diaphragm plate 20 and the washer 25. The diaphragm plate 20, diaphragm base 19 and washer 25 are provided with a bore 26, through which a shaft 27 projects, of which the head 28 is configured in such a way that it holds the diaphragm base 19, the diaphragm plate 20 and the sleeve 23 together by means of a type of rivet joint. In this case, the shaft 27 projects through an opening 30 arranged in the centre of an inversion 29 in the base 22 of the box base 17', the washer 25 being supported on an inversion 29 which is raised from the base 22 of the box base 17'.

The shaft 27 is guided by an insert 31 which is inserted from outside the pressure-measuring device 1 into the inversion 29 in the box base 17' and which a sealing ring 32 seals against the box base 17'. The insert 31 is inserted into the inversion 29 in the box base 17' in such a way that it is sealed flush with the lower side of the base 22 of the box base 17'. A base plate 33 lies from the outside over the inversion 29 and holds the insert 31. The base plate 33 is provided with an aperture 34, through which the shaft 27 is guided.

The end face 39 of a transmission member 5 configured as a toothed rack 5' rests on the diaphragm plate 20. The toothed rack 5' is displaceably received in a vertical guide 40. The toothed rack 5' is provided in its longitudinal direction on the side facing the box cover 16 with a receptacle 41 for a pressure spring 11. The pressure spring 11 is supported on the roof 42 of an extension 43 arranged on top of the box cover 16' and presses the toothed rack 5' against the diaphragm plate 20. In the process, the guide 40 for the toothed rack 5' extends into the extension 43 of the box cover 16'. The extension 43 thus allows a larger path of displacement S of the diaphragm 4 since it makes the necessary movement space available to the toothed rack 5'.

The teeth 44 of the toothed rack 5' engage in a rotational element 6 in the form of a toothed wheel 6', the movements of the toothed rack 5' and thus of the diaphragm 4 being transferred to the toothed wheel 6', and the toothed rack 5' and toothed wheel 6' forming a transmission mechanism 18 according to the invention for the movements of the diaphragm. The toothed wheel 6' comprises a storage sleeve 45 in the hub region, with which sleeve the toothed wheel is rotatably mounted to a journal 46 at an angle $\alpha$.

A marker 7 is superimposed on the toothed wheel 6', which marker, in this case, is a radially magnetised permanent magnet 7'. The position of the permanent magnet 7' is detected with the aid of a sensor 8 which is only indicated in Fig. 1, is directed towards the toothed wheel 6' and is in the form of a magnetic sensor 8' controlled by saturation.

An optical marker 7" or a three-dimensional structure 7''' may also be used as a marker 7, which can be correspondingly detected by an optical sensor 8" or a proximity sensor 8'''. In order to attach a sensor 8 to the diaphragm cylinder 1', the box cover 16' is provided with an attachment mechanism 9, to which the sensor 8 can be affixed. In this case, the attachment mechanism 9 is substantially implemented by a catch spring 47.

As soon as the pressure $P_1$ in the chamber 3' exceeds the pressure $P_2$ in the chamber 2' and also exerts a force on the diaphragm which is greater than the spring load F exerted by the spring 10 and pressure spring 11 along with the gravitational force and possible frictional forces, the diaphragm 4 moves out of its starting position A and follows a path of displacement S according to the pressure differential. The path of displacement S is substantially delimited by the roof 42 of the extension 43 of the box cover 16', said roof serving as a stop for the toothed rack 5', and by the minimum longitudinal extension of the spring 10.

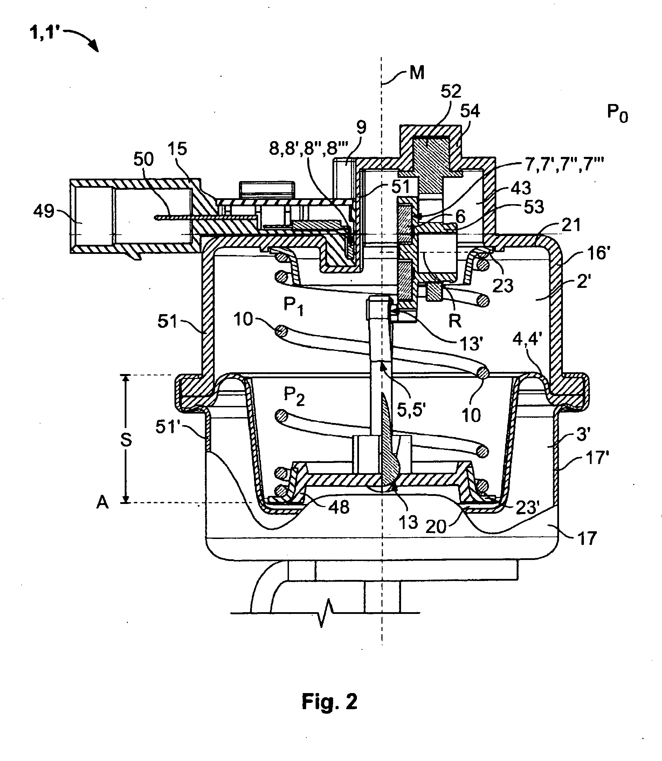

Fig. 2 is a schematic sectional view of a pressure-measuring device 1 configured according to the invention in the form of a diaphragm cylinder 1'. The diaphragm cylinder 1' is, in this case, rotated through 90° about its centre axis M compared to the diaphragm cylinder 1' shown in Fig. 2. The rotational element 6 is therefore shown in a sectional view. Instead of a toothed wheel 6' and a toothed rack 5', a tappet or connecting rod 5" is used as a transmission member 5 which is coupled to a fixing device 48 on the diaphragm plate 20 with the aid of a ball bearing 13. The fixing device 48 is therefore provided with a sleeve 23' which, like the sleeve 23 which rests against the upper side 21 of the box cover 16', centres the spring 10 which holds the diaphragm 4 in a starting position. In contrast to the diaphragm cylinder 1' shown in Fig. 1, a shaft 27 has been omitted in this case.

As soon as the diaphragm 4 is moved out of its starting position A, it effects a path of displacement S and the connecting rod 5" transfers the substantially linear movements of the diaphragm to the rotational element 6 which is displaceable about its axis of rotation R and is provided with a marker 7 which, in this case, is detected by a sensor element 8. The sensor element 8 is integrated into a sensor module 15 which is fixed to the attachment mechanism 9. The sensor module 15 further comprises a socket 49 which is provided with a plug-in contact 50.

Fig. 2 clearly shows, in particular, the space-saving construction of the diaphragm cylinder 1', of which the overall height can be delimited in that the rotational element 6 and therefore the transmission mechanism 18 consisting of the rotational element 6 and transmission member 5 is housed, in part, in the extension 43 of the box cover 43.

The sensor module 15 is arranged laterally adjacent to the extension 43 of the box cover. It can be separated from the diaphragm cylinder 1' at any time, even if the chambers 2' or 3' are loaded with pressure or are affected by low pressure, since the sensor element 8 can detect the position of the rotational element 6 and thus the angle of rotation $\alpha$ thereof through the wall 51 of the box cover 16'.

The assembly is considerably simplified by a largely modular construction of the diaphragm cylinder 1' configured according to the invention, in which additional fixing means, such as screws or bolts, can be largely dispensed with. The support 51 for the rotational element 6 is thus provided with an adjustment element 52 which is easily inserted into a recess 54 in the extension 43 of the box cover 16'. The rotational element 6 is positively connected to the connecting rod 5" via the support 13', the connecting rod in turn being positively coupled to the fixing device 43 via the ball bearing 13. The rotational element 6, with its support 53, and the connecting rod 6", the fixing device 48, the cylindrical sleeves 23 and 23' and the spring 10 thus form a functional unit in the form of a transformation module 14 for the movements of the diaphragm 4. As soon as the box cover 16' is separated from the box base 17', the transformation module 14 can easily be removed or inserted.

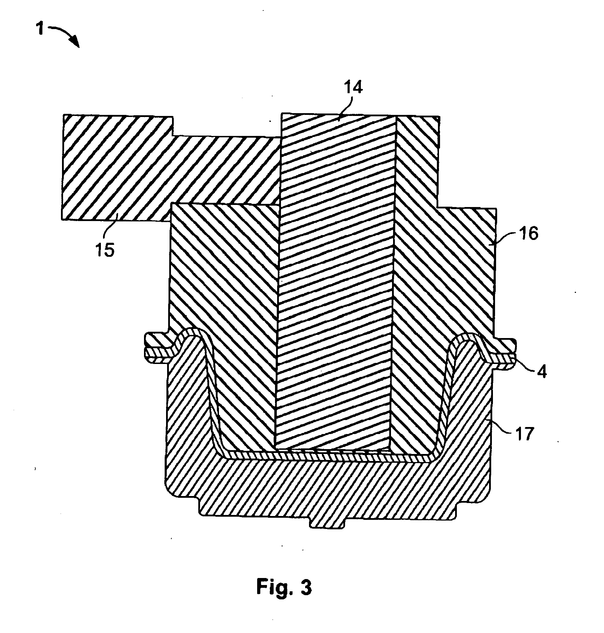

The largely modular construction of a pressure-measuring device 1 configured according to the invention is shown schematically in Fig. 3. Here, it is clarified that the pressure-measuring device 1 consists substantially of four elements, namely a body 17 to which the diaphragm 4 can be attached, as well as a cover 16, the transformation module 14 and the sensor module 15.

The modular construction is particularly suited for delivering the pressure-measuring device 1 in the form of a kit 55, which is not shown in the drawings. The kit could substantially include the body 17, the cover 16, the transformation module 14 and the sensor module 15, with the body 17, cover 16 and transformation module 14 also being able to be put together to form a pressure-measuring device 1, to which the sensor module 15, for example, can be attached in a simple manner.

The aforementioned embodiments may be modified within the scope of the invention. The diaphragm 4 may therefore, for example, also be attached to the cover 16, the body 17 in turn being able to receive the transformation module 14. A modular construction is not necessarily required in order to convert, according to the invention, translatory movements of the diaphragm into rotational movements of a rotational element 6. A construction of this type does, however, simplify the assembly and maintenance of a pressure-measuring device 1 according to the invention. In the process, the individual elements of the pressure-measuring device may be combined in any way to form modules.

In addition to the pot diaphragms 4' shown here, flat diaphragms or roll diaphragms may also be used as diaphragms, depending on which path of displacement S the diaphragm 4 is to follow. Furthermore, it is not necessarily compulsory for the sensor element 8 to be arranged outside the pressure spaces 2 and 3 in order to detect the position or angle of rotation $\alpha$ of a rotational element 6. This approach, however, facilitates the replacement of a sensor module 15 when the pressure-measuring device is loaded with pressures which differ from the ambient pressure.

Furthermore, the pressure spaces 2 or 3 do not have to be sealed against the surrounding area and the pressure $P_0$ which prevails there. As long as a pressure differential between the pressure spaces 2 and 3 can be established, the pressure-measuring device 1 according to the invention can be used and, if desired, a pressure $P_1$ in the pressure space 2 as well as a pressure $P_2$ in the pressure space 3 can also correspond to the ambient pressure $P_0$ as long as the pressures $P_1$ and $P_2$ can be different. Correspondingly, any means of supply and admission can be inserted into the walls 51 and 51' of the cover or the body in order to feed the fluids provided for measuring pressure into the pressure-measuring device 1.

The chambers 2' and 3' may also be omitted from the embodiment. It is of fundamental importance that the embodiment of a pressure-measuring device according to the invention allows the diaphragm 4 to be able to be arranged between two regions in which different pressures can be implemented.

**Claims**

1. Pressure-measuring device (1) with a pressure-dependent displaceable diaphragm (4) which is coupled to a substantially linearly displaceable transmission member (5), **characterised in that** the transmission member (5) engages with a rotatably mounted rotational element (6) eccentrically to the axis of rotation (R) thereof in such a way that the substantially linear movements of the transmission member (5) can be converted into rotational movements of the rotational element (6).

2. Pressure-measuring device (1) according to claim 1, **characterised in that** the rotational element (6) is a rotary signal transmitter with at least one marker (7), of which the rotational position can be detected by a sensor (8).

3. Pressure-measuring device (1) according to claim 2, **characterised in that** the marker (7) is a magnet (7') and the sensor (8) is a magnetic-field sensor (8').

4. Pressure-measuring device (1) according to claim 2, **characterised in that** the marker (7) is an optical marker (7") and the sensor (8) is an optical sensor (8").

5. Pressure-measuring device (1) according to claim 2, **characterised in that** the marker (7) is a three-dimensional structure (7''') and the sensor (8) is a proximity sensor (8''').

6. Pressure-measuring device (1) according to any one of the preceding claims, **characterised in that** the pressure-measuring device (1) comprises at least one pressure space (2, 3).

7. Pressure-measuring device (1) according to any one of claims 2 to 6, **characterised in that** the sensor (8) can be attached to an attachment mechanism (9) on the pressure-measuring device (1).

8. Pressure-measuring device (1) according to either claim 6 or claim 7, **characterised in that** the attachment mechanism (9) is arranged outside the at least one pressure space (2, 3).

9. Pressure-measuring device (1) according to any one of the preceding claims, **characterised in that** the diaphragm (4) is coupled to at least one spring (10) which operates substantially parallel to the path of displacement (S) of said diaphragm.

10. Pressure-measuring device (1) according to any one of the preceding claims, **characterised in that** the transmission member (5) is a toothed rack (3') and the rotational element (6) is formed, at least in portions, as a toothed wheel (6') which engages with the toothed rack (6').

11. Pressure-measuring device (1) according to any one of the preceding claims, **characterised in that** the toothed rack (6') is pressed against the diaphragm (4) with the aid of at least one pressure spring (11).

12. Pressure-measuring device (1) according to any one of claims 1 to 9, **characterised in that** the transmission member (5) is a connecting rod (5") and forms a crank mechanism (12) with the rotational element (6).

13. Pressure-measuring device (1) according to claim 12, **characterised in that** the connecting rod (5") is fixed to the diaphragm (4) and/or the rotational element (5) via at least one ball bearing (13, 13').

14. Pressure-measuring device (1) according to any one of the preceding claims, **characterised in that** the transmission member (5) and the rotational element (6) are arranged in the at least one pressure space (2, 3).

15. Pressure-measuring device (1) according to any one of the preceding claims, **characterised in that** the pressure-measuring device (1) is composed in a modular manner of a transformation module (14), a cover (16) and a body (17) which is shaped so as to complement the cover (16), the transformation module (14) comprising at least the rotational element (6), the cover (16) sealing the at least one pressure space (2, 3), at least in part, and the body (17) receiving the diaphragm (4).

16. Kit (55) for a pressure-measuring device (1), the pressure-measuring device (1) comprising a pressure-dependent displaceable diaphragm (4) which is coupled to a substantially linearly displaceable transmission member (5), **characterised in that** the kit (55) includes a transformation module (14) and a sensor module (15) with at least one sensor (8), the transformation module (14) comprising at least one rotational element (6) which is configured so as to be able to engage with the transmission member (5) and by means of which the substantially linear movements of the transmission member (5) can be converted into rotational movements of the rotational element (6), and it being possible to detect the position of the rotational element (6) via the sensor (8).

17. Method for determining the position of a diaphragm (4) which moves in a pressure-measuring device (1) depending on a pressure differential, the movements of the diaphragm (4) being transferred by a substantially linearly displaceable transmission member (5), **characterised in that** the substantially linear movements of the transmission member (5) are converted into rotational movements of a rotational element (6).

18. Method according to claim 17, **characterised in that** the transmission member (5) engages with the rotational element (6) eccentrically to an axis of rotation (R) of said rotational element (6).

19. Method according to either claim 17 or claim 18, **characterised in that** the rotational element (6) is provided with at least one marker (7) in the form of a magnet (7'), an optical marker (7") and/or a three-dimensional structure (7'''), and the position of the rotational element (6) can be detected by a sensor (8) in a contact-free manner.

**20.** Method according to any one of claims 17 to 19, **characterised in that** the pressure-measuring device (1) is provided with at least one pressure space (2, 3).

**21.** Method according to claim 20, **characterised in that** the pressure-measuring device (1) is configured in such a way that the marker (7) is arranged in the at least one pressure space (2, 3) and can be detected by a sensor (8) outside the at least one pressure space (2, 3).

**22.** Method according to any one of claims 17 to 21, **characterised in that** the transmission member (5) is formed, at least in portions, as a toothed rack (5') and the rotational element (6) is configured, at least in sections, as a toothed wheel (6').

**23.** Method according to claim 22, **characterised in that** the transmission member (5) is pressed against the diaphragm (4) with the aid of a pressure spring (11).

**24.** Method according to any one of claims 17 to 23, **characterised in that** the transmission member (5) and the rotational element (6) are cooperatively configured as a crank mechanism (12).

**25.** Method according to any one of claims 17 to 24, **characterised in that** the diaphragm (4) is held in a starting position (A) by a force (F).

**26.** Method according to any one of claims 17 to 25, **characterised in that** the pressure-measuring device (1) is substantially composed of a transformation module (14), a cover (16) and a body (17), at least the rotational element (6) being integrated into the transformation module (14), the diaphragm (4) being fixed to the body (17) and the at least one pressure space (2, 3) being sealed, at least in part, by the cover (16).

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Fluidtechnick von A - Z, vereinigte Fachverlage,* May 1995, ISBN 3-7830-0286-9